# EUROPEAN PATENT APPLICATION

(11) **EP 4 261 679 A1**
(43) Date of publication of application: **18.10.2023**
(21) Application number: 22305537.7
(22) Date of filing: 13.04.2022
(51) Int. Cl.: G06F 9/30, G06F 21/72, G06F 21/79, H04L 9/40

(54) **METHOD FOR A SECURE EXECUTION OF INSTRUCTIONS**

(71) Applicant: Thales Dis France SAS, 92190 Meudon (FR)
(72) Inventor: COULON, Jean Roch, 92190 Meudon (FR); SINTZOFF, André, 92190 Meudon (FR); TEGLIA, Yannick, 92190 Meudon (FR)
(74) Representative: Bricks, Amélie

(57) **Abstract**

The present invention relates to a method for a secure execution of a first instruction by a processor of an electronic system comprising at least one memory configured to be coupled to the processor, and said processor comprises processor registers (103) and executions units comprising a load and store unit (104a),
said method comprising:
- fetching (S1) said first instruction in an execution pipeline of the processor,
- determining (S2) if said first instruction to be executed is a load instruction to be protected for loading protected data and associated security information from said at least one memory to the processor registers or a store instruction to be protected for storing protected data and associated security information from the processor registers to said at least one memory,
- when said first instruction to be executed is a load instruction to be protected or a store instruction to be protected, executing sequentially by said processor at least a first operation (S4), a second operation (S5) and a third operation (S6), wherein :
• when said first instruction is a load instruction to be protected, said first operation is a load operation for loading said protected data from said at least one memory to said load and store unit, said second operation is a load operation for loading said security information associated to said protected data from said at least one memory to said load and store unit, and said third operation is a write operation for copying said protected data and said associated security information from said load and store unit to the processor registers,
• when said first instruction is a store instruction to be protected, said first operation is a write operation for copying said protected data and said associated security information from the processor registers to said load and store unit, said second operation is a store operation for storing said copied protected data from said load and store unit to said at least one memory and said third operation is a store operation for storing said copied associated security information from said load and store unit to said at least one memory,
said security information associated to protected data being data enabling to transform said protected data into plain data and/or integrity data enabling to verify integrity of said protected data.

## Description

### FIELD OF THE INVENTION

The present invention relates to the field of securing software execution on an electronic device against attacks, and more particularly to a method for securing the execution of instructions by a processor of the electronic device.

### BACKGROUND OF THE INVENTION

Electronic devices are now widely used to store data which must be protected against any unauthorized access by an attacker: personal data such as identity information, biometric data, banking information, secret data such as cryptographic keys etc. Therefore security measures are usually applied to such data in order to mitigate any fraudulent reading or modification. Such data can be encrypted; their integrity can be increased by storing security information such as a signature, a checksum or hash value.

In order to use such data, the CPU of the electronic device storing the data should read it in memory before any subsequent use by an instruction executed by the CPU. At that time, data are transferred on a bus from the memory of the electronic device to an internal register of the CPU, and then used by the CPU for performing its instruction.

During such a manipulation of the data, an attacker may perform a side-channel attack which would enable the attacker to gain knowledge of sensitive information processed by the CPU such as encryption keys from electromagnetic leakage or power consumption from the CPU. He may also perform a fault injection attack in order to induce a malfunction of the electronic device and retrieve information about the data from this degraded state. Therefore, to prevent such attacks, countermeasures applied to sensitive data shall be applied as widely as possible on the execution chain, and not only during the storage of the data in the memory of the electronic device. It shall be applied in memory interface, busses, CPU caches and internal registers, up to the execution stage when the CPU is able to handle protected data.

A problem arises from the fact that such measures have an impact on data size, induced by the security information accompanying protected data: integrity check information, mask data etc. As a result, in order to make an existing electronic device able to store and handle such security information along protected data up to the CPU, the hardware design of such an electronic device shall usually be adapted, for example by increasing data word size in memory, by increasing data bus width. Such modifications have a huge impact on an existing design, in terms of both hardware cost and performance, without mentioning the necessary engineering and testing effort.

Consequently, there is a need for a method enabling a secure execution of an instruction by a CPU, by increasing the protection of sensitive data manipulated by this instruction against fault attacks or side-channel analysis, with a lower impact on the architecture of the electronic device performing this execution.

### SUMMARY OF THE INVENTION

For this purpose and according to a first aspect, this invention therefore relates to a method for a secure execution of a first instruction by a processor of an electronic system, wherein said electronic system comprises at least one memory configured to be coupled to the processor, and said processor comprises processor registers and execution units comprising a load and store unit, said method comprising:
a) fetching said first instruction in an execution pipeline of the processor,
b) determining if said first instruction to be executed is a load instruction to be protected for loading protected data and associated security information from said at least one memory to the processor registers or a store instruction to be protected for storing protected data and associated security information from the processor registers to said at least one memory,
c) when said first instruction to be executed is a load instruction to be protected or a store instruction to be protected, executing sequentially by said processor at least a first operation, a second operation and a third operation, wherein :
   - when said first instruction is a load instruction to be protected, said first operation is a load operation for loading said protected data from said at least one memory to said load and store unit, said second operation is a load operation for loading said security information associated to said protected data from said at least one memory to said load and store unit, and said third operation is a write operation for copying by said coprocessor said protected data and said associated security information from said load and store unit to the processor registers,
   - when said first instruction is a store instruction to be protected, said first operation is a write operation for copying said protected data and said associated security information from the processor registers to said load and store unit, said second operation is a store operation for storing said copied protected data from said load and store unit to said at least one memory and said third operation is a store operation for storing said copied associated security information from said load and store unit to said at least one memory,
   said security information associated to protected data being data enabling to transform said protected data into plain data and/or integrity data enabling to verify integrity of said protected data.

Such a method enables to increase the security of the execution of the first instruction by enabling to keep data with a masked/encrypted form and/or to perform integrity check on it from memories of the electronic system up to the processor registers of the processor. It enables to do so without any additional requirements on the size of the bus connecting the memories and the processor by using separate operations for copying the data and their associated security information

Said security information associated with data may be mask data, a cryptographic key or integrity data among redundancy data, a checksum, a minimum value and/or a maximum value of said protected data.

The method according to the first aspect may comprise, when said first instruction is a load instruction to be protected, after said first and second operations have been executed by the processor, performing a security check of said data loaded by the first operation using associated security information loaded by the second operation.

By doing so, any fraudulent alteration of the data between the reading of the data in the memories of the electronic system and their copy in the processor may be detected before the data is requested from the processor registers.

The method according to the first aspect may comprise, when the processor comprises a secure execution unit or secure coprocessor executing at least the step c. described above, and said electronic system comprises a requestor executing a second instruction, when an access to said data copied in the processor registers is requested by said second instruction, the following steps executed by the secure execution unit or secure coprocessor:
- determining if said requestor is secure or not,
- when said requestor is determined as secure, transferring said requested data and said associated security information to the requestor and executing by said requestor said second instruction based on said transferred data and said transferred associated security information,
- when said requestor is determined as not secure, processing by the secure execution unit or secure coprocessor said requested data by transforming said requested data into plain data and/or verifying integrity of said requested data using the security information associated to said requested data stored in the processor registers, transferring said processed data to the requestor and executing by the requestor said second instruction based on said processed data.

Such a method enables to extend the protection of the data up to the requestor if it is secure; to detect any tampering of the data before the execution of the second instruction; and at the same time to provide unmasked/decrypted data to the requestor if it is not secure and incapable of handling masked/encrypted data.

According to a first embodiment, determining if said first instruction is a load or store instruction to be protected comprises determining whether an opcode of said instruction corresponds to a protected instruction or to an unprotected instruction.

According to a second embodiment, determining if said first instruction is a load or store instruction to be protected comprises determining if said first instruction to be executed comprises predetermined metadata.

According to a third embodiment, determining if said first instruction is a load or store instruction to be protected comprises verifying a value stored in a security configuration register of said processor.

By doing so, the protection of load and store instructions may be selectively activated for some load and store instructions only.

According to a second aspect, this invention relates to a computer program product directly loadable into the memory of at least one computer, comprising software code instructions for performing the steps of the methods according to the first aspect of the invention when said product is run on the computer.

According to a third aspect, this invention relates to an electronic system comprising a processor configured for performing the steps of the method according to the first aspect of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an electronic system according to the present invention;
- Figure 2a is a schematic illustration of a method for secure execution of a load instruction by an electronic system according to an embodiment of the present invention;
- Figure 2b is a schematic illustration of a method for secure execution of a store instruction by an electronic system according to an embodiment of the present invention;
- Figures 3a and 3b are schematic illustrations of steps according the method for providing a requestor access to protected data stored in a processor register of the execution unit.

### DETAILED DESCRIPTION OF EMBODIMENTS OF THE INVENTION

According to a first aspect, the invention relates to a method for a secure execution of a first instruction by a processor 101 of an electronic system 100.

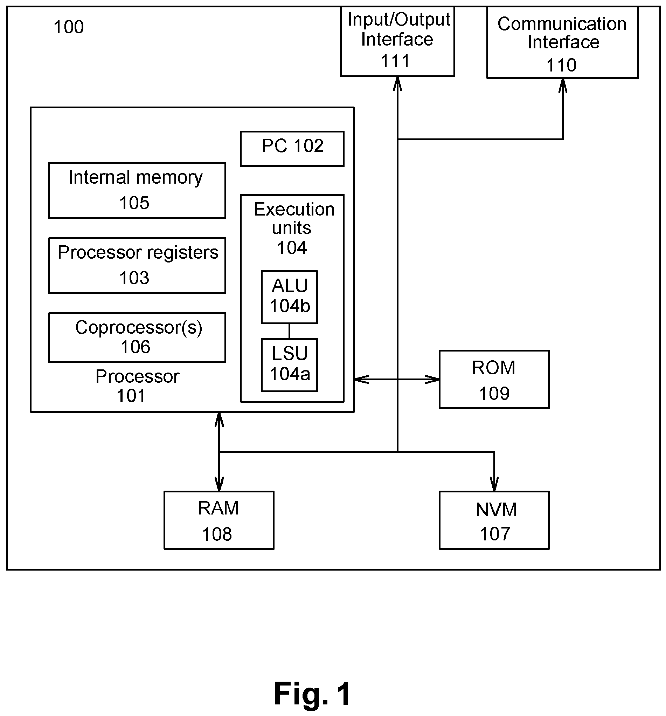

Such an electronic system 100 comprises, as depicted on **Figure 1****,** a processor 101 for the execution of code comprising the first instruction. This processor comprises a program counter PC 102, processor registers 103 and execution units 104 which may include, a load and store unit LSU 104a and an arithmetic and logical unit ALU 104b. The processor may also include additional internal memories 105 such as cache memories, and one or more coprocessors 106, located for example on the same die or the same PCB than the processor, secure or not. The electronic system also comprises at least one memory, such as a Non Volatile memory 107, a RAM memory 108 and/or a ROM memory 109, storing instructions of the code and additional data including data to be used as instruction operands and associated security information. These three kinds of data may be stored in a single memory or in separate memories. The electronic system 100 may further include a communication interface 110 by which the electronic system 100 may be connected to a network. Such an interface may be a wireless interface connected to an antenna and may be used to connect the electronic system 100 to various forms of wireless networks, e.g., wide-area networks, WiFi networks, or mobile telephony networks. Alternatively, such an interface may be a wired interface such as an Ethernet one. The electronic system 100 may also include input/output means 111 providing interfaces to a user of the first device, such as one or more screens, loudspeakers, a mouse, tactile surfaces, a keyboard etc...

Such an electronic system may for example be a tamperproof smartcard, a personal computer, a server or a smartphone.

When the first instruction is an instruction manipulating data, such as a load or store instruction, this data shall be accompanied with security information, in order to ensure a secure execution of this first instruction and to prevent any reading or manipulation of the data by an attacker. For example, the data may be masked or encrypted and the security information associated to it may be mask data or a cryptographic key enabling to transform the protected data into plain data by unmasking or deciphering it. The security information may also be integrity data enabling to check the integrity of the data, such as a checksum or a hash value, redundancy data, a minimum value and/or a maximum value of the data to which they are associated. It may be also color tags as described in the patent application EP20306400.1 filed on 2020, 18 November.

When the first instruction transmits such protected data, associated to such security information, between the processor and at least one memory of the electronic system, a first main idea of the invention is, when executing this first instruction, to perform sequentially at least two operations which copy separately the data themselves, and the security information associated to it. By doing so, such security information do not only reside in memories outside the processor. The data can be accompanied by their security information also in the internal memories and registers of the processor, which enables to apply data protection such as masking of the data inside the processor, and to perform security checks, such as integrity check, on the data when they are stored in the processor. In order to copy data and their associated security information by a single operation, the width of the bus connecting the memories of the electronic system and the processor would have to be expanded in order to cope with the security information. By using a separate operation for copying security information, the size of the bus may remain standard and no expansion of the bus width is required.

A second main idea of the invention is to use a load and store unit LSU 104a, as a temporary buffer between the processor registers 103 of the processor and the at least one memory 107, 108, 109 of the electronic system located outside the processor. As an example, in case of a load instruction of the data from a memory to the processor registers of the processor, it enables to perform operations on the data, such as unmasking it, deciphering it or checking their integrity, after their transfer from a memory to the LSU of the processor, but before their copy in the processor registers of the processor.

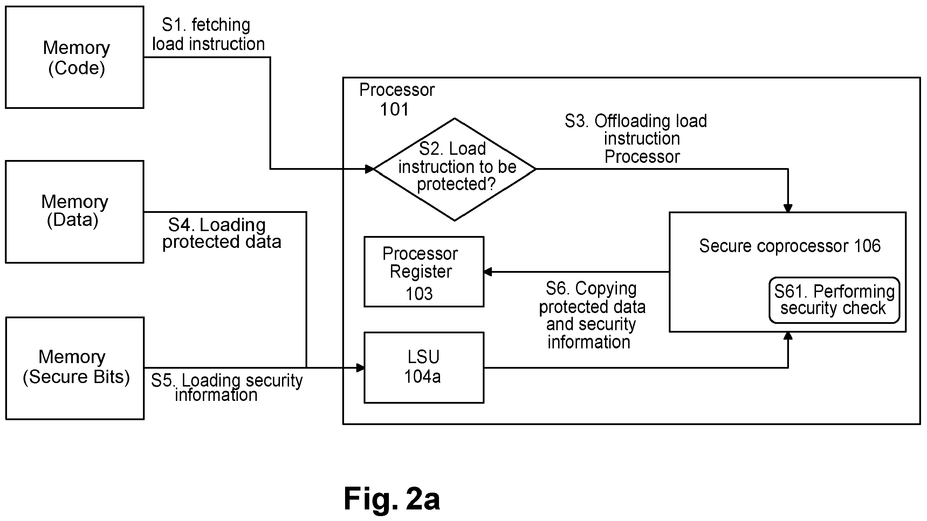

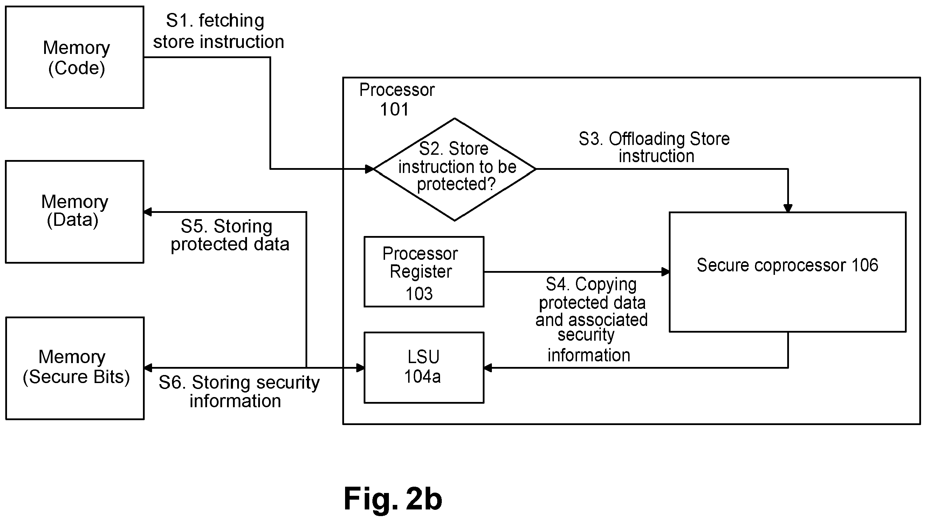

The following paragraphs describe in detail the steps of the method for secure execution of a first instruction by the electronic system according to the invention. The case of a load instruction is depicted on **Figure 2a****,** and the case of a store instruction is depicted on **Figure 2b****.** Such a secure execution may be performed either by a secure execution unit 104 or by a secure coprocessor 106 of the processor 101. Figures 2a and 2b correspond to the case where such an execution is performed by a secure coprocessor.

In a first step S1, the processor fetches the first instruction, from a memory of the electronic system 107, 108, 109 storing code to be executed, in an execution pipeline of the processor 101.

In a second step S2, the processor determine if the first instruction to be executed is an instruction copying data between one or memories and the processor and if it shall be protected against fraudulent manipulation of such data. More precisely, in this step the processor determine if the first instruction to be executed is one of the two following instructions:
- a load instruction to be protected for loading protected data and associated security information from at least one memory to the processor registers 103, or
- a store instruction to be protected for storing protected data and associated security information from the processor registers 103 to at least one memory.

The protection of the execution of the first instruction may be activated by several means which are not exclusive one with each other.

Instructions to be protected may be identified by specific opcodes, added to the instruction set of the processor. In such a case, at the second step, the processor may determine if the first instruction is to be protected by determining whether an opcode of said instruction corresponds to a protected instruction or to an unprotected instruction.

Instructions to be protected may also be identified by specific metadata or combination of metadata embedded in the instruction. In such a case, at the second step, the processor may determine if the first instruction is to be protected by determining if said first instruction to be executed comprises such predetermined metadata.

The protection of the execution of an instruction may also be activated independently of the instruction itself, for example by setting a register of the processor to a predefined value. In such a case, at the second step, the processor may determine if the first instruction is to be protected by verifying a value stored in a security configuration register of the processor.

The protection may also be permanently activated for any instruction fetched to the processor, without the need to perform any action. In such a case, any load or store instruction fetched to the processor is considered as to be protected.

At this stage, when the first instruction is not a load or store instruction, or when it is a load or store instruction but not identified as to be protected, as will be described further below, the first instruction may be executed by the processor as described in the State of the Art.

But when it has been determined at the second step S2 that the first instruction to be executed is a load instruction to be protected or a store instruction to be protected, the following steps are executed according to the method of the invention.

In a third step S3, when the first instruction to be protected shall be executed by a secure coprocessor 106, the processor offloads the first instruction from its execution pipeline to an execution pipeline of the secure coprocessor. This offloading is optional since the processor may have the first instruction executed by a secure execution unit among its own execution units 104. In the following paragraphs, it will be considered that the first instruction is executed by a secure component of the processor: either a secure execution unit of the processor or a secure coprocessor if any.

Then, for executing the first instruction, the processor 101 executes sequentially at least a first operation in a fourth step S4, a second operation in a fifth step S5, and a third operation in a sixth step S6.

When said first instruction is a load instruction to be protected, the protected data and the associated security information are loaded separately to the load and store unit LSU 104a: at the fourth step S4, the first operation is a load operation for loading the protected data from the memory storing it to the load and store unit; and at the fifth step S5 the second operation is a load operation for loading the security information associated to these data from the memory storing it to the load and store unit (LSU) 104a. After these two operations have been executed, both the protected data and the associated security information are stored in the LSU, despite the fact that the size of the bus connecting the memories and the LSU is probably smaller than the accumulated size of the data and the security information. Then, at the sixth step S6, the third operation is a write operation for copying the loaded protected data and the associated security information from the load and store unit to the processor registers 103. These three operations may be executed in a different order; for example, the security information may be loaded before the protected data.

The first instruction may also be a store instruction to be protected. For example, a previous instruction may have generated output data and associated security information, both stored temporarily in the processor registers 103 of the processor. In such a case, the protected data and the associated security information are first retrieved in the LSU 104a : at the fourth step S4, the first operation is a write operation for copying the protected data and the associated security information from the processor registers to the load and store unit. Then the protected data and the associated security information may be stored separately from the load and store unit LSU to at least one memory 107, 108, 109 : at the fifth step S5 the second operation is a store operation for storing the copied protected data from the load and store unit to a memory; and at the sixth step S6 the third operation is a store operation for storing the copied associated security information from the load and store unit of said processor to a memory. These three operations may be executed in a different order; for example, the security information may be stored before the protected data.

The paragraphs above describing the execution of the first, second and third operations mention copying data to or from the processor registers. Depending on the size of the registers, the size of the copied data and, in case of copying from the registers, the location of the data in the processor registers, these operations may involve one or several processor registers.

When the first instruction is a load instruction to be protected, loading the protected data and the associated security information in the LSU enables to perform actions on these data after their transmission on the bus between the memories of the electronic system and the processor, before storing it into the processor registers. Therefore, after the first and second operations have been executed by the processor at the fourth and fifth steps S4, S5, during a checking step S61, the processor may perform a security check of the data loaded by the first operation using associated security information loaded by the second operation. The processor may for example check the integrity of the data in order to verify, before copying it to the processor registers, that it has not been altered by a fault attack during the execution of the fourth and fifth step. In case this security check fails, the processor may perform various actions such as activating countermeasures, raising an alert, preventing the copy of the checked data to the processor registers, deleting the checked data or moving it to a quarantine memory zone, performing a reset of the electronic system.

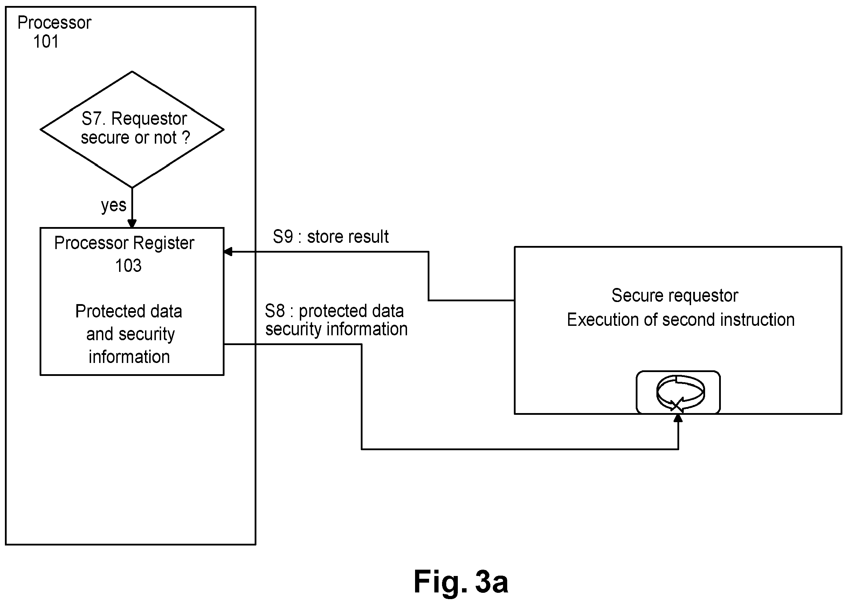

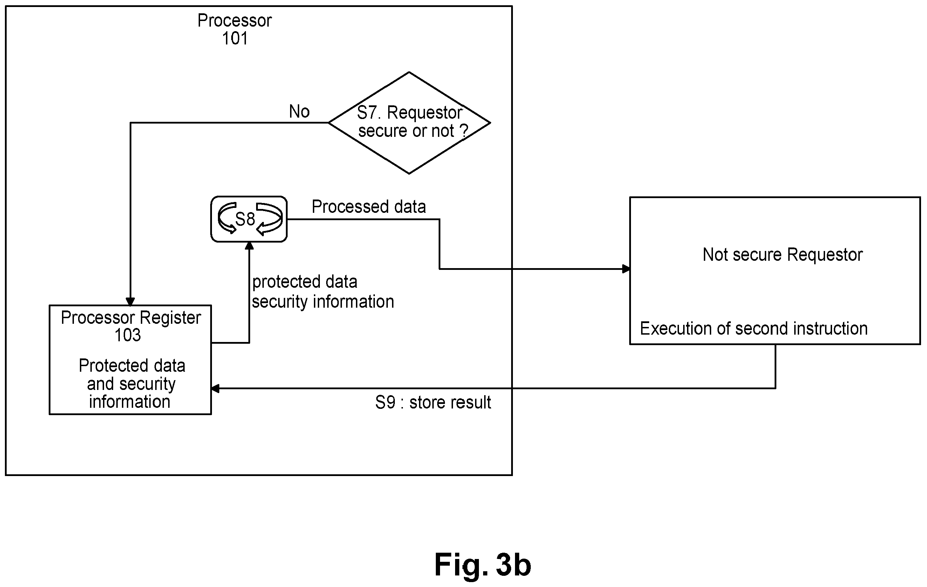

When the first instruction is a load instruction, protected data and associated security information are loaded in the processor registers of the processor by a secure execution unit or a secure coprocessor. After the execution of these load operations, these data may be requested for executing a subsequent instruction, hereafter called second instruction, by another circuit of the electronic system hereafter called "requestor". Such a requestor of the data may for example be an execution unit of the processor 104, a coprocessor 106 of the processor or another processor or coprocessor of the electronic system. The behavior of the secure execution unit or secure coprocessor in such a case may depend on whether the requestor of the data is considered as secure or not, as illustrated on **Figures 3a** and **3b****.** On these figures the requestor is shown as external to the processor but it may be included in it as discussed above.

In a seventh step S7, it is determined if the requestor is secure or not.

If the requestor is secure, the requestor extends the secure perimeter including the electronic system memories and the secure execution unit or the secure coprocessor, and the data may remain as they are: masked/encrypted if they were masked/encrypted in the LSU and the processor registers, and accompanied by their security information for later unmasking/decrypting and/or verification of their integrity. Consequently, as shown on Figure 3a, when the requestor is determined as secure, the processor may, in an eighth step S8, transfer the requested data and the associated security information to the requestor and the requestor may execute the second instruction based on the transferred data and the transferred associated security information. The requestor may be able to process masked data and may not need to unmask it to perform the second instruction, for example, when such a masking is a XOR and that the second instruction is compatible with it (for example another XOR).

On the contrary, if the requestor is not secure, as shown on Figure 3b, the security chain ends at the processor registers. Consequently, when the requestor is determined as not secure, the secure execution unit or secure coprocessor may, at the eighth step S8, process the requested data by transforming the requested data into plain data, for example by unmasking or deciphering it, and/or verifying the integrity of the requested data using the security information associated to the requested data stored in the processor registers. After this processing has been successfully performed, the secure execution unit or secure coprocessor may transfer the processed data to the requestor.

In a ninth step S9, the requestor may execute the second instruction based on said processed data and then store the result in processor registers.

According to a second aspect, the invention relates to a computer program product directly loadable into the memory of at least one computer, comprising software code instructions for performing, when said product is run on the computer, the steps of the methods described here before.

In addition to these features, the computer program according to the second aspect of the invention may be configured for performing or may comprise any other features described here before.

The electronic system and method presented here therefore enable to increase the security of the execution of the first instruction by enabling to keep data under a masked form and/or to perform integrity check on it from memories of the electronic system up to the processor registers of the processor. It enables to do so without any additional requirements on the size of the bus connecting the memories and the processor by using separate instruction for copying data and their associated security information.

## Claims

1. A method for a secure execution of a first instruction by a processor(101) of an electronic system (100),
wherein said electronic system comprises at least one memory (107, 108, 109) configured to be coupled to the processor, and said processor comprises processor registers (103) and execution units (104) comprising a load and store unit (104a) said method comprising:
a) fetching (S1) said first instruction in an execution pipeline of the processor,
b) determining (S2) if said first instruction to be executed is a load instruction to be protected for loading protected data and associated security information from said at least one memory to the processor registers or a store instruction to be protected for storing protected data and associated security information from the processor registers to said at least one memory,
c) when said first instruction to be executed is a load instruction to be protected or a store instruction to be protected, executing sequentially by said processor at least a first operation (S4), a second operation (S5) and a third operation (S6),
wherein :
• when said first instruction is a load instruction to be protected, said first operation is a load operation for loading said protected data from said at least one memory to said load and store unit, said second operation is a load operation for loading said security information associated to said protected data from said at least one memory to said load and store unit, and said third operation is a write operation for copying said protected data and said associated security information from said load and store unit to the processor registers,
• when said first instruction is a store instruction to be protected, said first operation is a write operation for copying said protected data and said associated security information from the processor registers to said load and store unit, said second operation is a store operation for storing said copied protected data from said load and store unit to said at least one memory and said third operation is a store operation for storing said copied associated security information from said load and store unit to said at least one memory,
said security information associated to protected data being data enabling to transform said protected data into plain data and/or integrity data enabling to verify integrity of said protected data.

2. The method of claim 1, wherein said security information are mask data, a cryptographic key or integrity data among redundancy data, a checksum, a minimum value and/or a maximum value of said protected data.

3. The method of claim 1 or 2, comprising, when said first instruction is a load instruction to be protected, after said first and second operations have been executed by the processor, performing a security check of said data loaded by the first operation using associated security information loaded by the second operation.

4. The method of any of claims 1 to 3, wherein said processor (101) comprises a secure execution unit (104) or secure coprocessor (106) executing at least the step c. of claim 1, and said electronic system comprises a requestor executing a second instruction, said method comprising by said secure execution unit or coprocessor, when an access to said data copied in the processor registers (103) is requested by said second instruction:
- determining (S7) if said requestor is secure or not,
- when said requestor is determined as secure, transferring said requested data and said associated security information to the requestor and executing by said requestor said second instruction based on said transferred data and said transferred associated security information (S8),
- when said requestor is determined as not secure, processing by the secure execution unit or secure coprocessor said requested data by transforming said requested data into plain data and/or verifying integrity of said requested data using the security information associated to said requested data stored in the processor registers, transferring said processed data to the requestor and executing by the requestor said second instruction based on said processed data.

5. The method of any of claims 1 to 4, wherein determining (S2) if said first instruction is a load or store instruction to be protected comprises determining whether an opcode of said instruction corresponds to a protected instruction or to an unprotected instruction.

6. The method of any of claims 1 to 4, wherein determining (S2) if said first instruction is a load or store instruction to be protected comprises determining if said first instruction to be executed comprises predetermined metadata.

7. The method of any of claims 1 to 4, wherein determining (S2) if said first instruction is a load or store instruction to be protected comprises verifying a value stored in a security configuration register of said processor.

8. A computer program product directly loadable into the memory of at least one computer, comprising software code instructions for performing the steps of any one of claims 1 to 7 when said product is run on the computer.

9. An electronic system (100) comprising a processor (101) configured for performing the steps of any one of claims 1 to 7.
